# FASCICULE DE BREVET EUROPEEN

(11) **EP 4 247 629 B1**
(45) Date de publication et mention de la délivrance du brevet: **26.03.2025**
(21) Numéro de dépôt: 21824610.6
(22) Date de dépôt: 17.11.2021
(51) Int. Cl.: B29D 30/08, B29D 30/16, B29D 30/30

(54) **PROCÉDÉ DE FABRICATION D'ÉBAUCHES DE PNEUMATIQUE**
VERFAHREN ZUR HERSTELLUNG VON REIFENROHLINGEN
METHOD FOR MANUFACTURING TIRE BLANKS

(30) Priorité: 18.11.2020 FR 2011827
(43) Date de publication de la demande: 27.09.2023
(73) Titulaire: COMPAGNIE GENERALE DES ETABLISSEMENTS MICHELIN, 63000 Clermont-Ferrand (FR)
(72) Inventeur: DETTORRE, Jean-Marie, 63040 Clermont-Ferrand CEDEX 9 (FR); BARD, Nicolas, 63040 Clermont-Ferrand CEDEX 9 (FR); DENIAU, Quentin, 63040 Clermont-Ferrand CEDEX 9 (FR); DRUET, Michel, 63040 Clermont-Ferrand CEDEX 9 (FR); LUTZ, Matthieu, 63040 Clermont-Ferrand CEDEX 9 (FR)
(74) Mandataire: M.F.P. Michelin
(86) Numéro de dépôt international: PCT/FR2021/052028
(87) Numéro de publication internationale: WO 2022/106781

(56) Documents cités:
- EP-A1- 1 533 107
- FR-A- 1 378 843
- FR-A3- 3 088 575

## Description

L'invention se situe dans le domaine de la fabrication des pneumatiques et concerne plus particulièrement un procédé de fabrication d'ébauches de pneumatique et une installation permettant la mise en œuvre d'un tel procédé.

Un pneumatique est partagé en trois zones distinctes comprenant un sommet qui comporte notamment une armature de sommet et une bande de roulement destinée à entrer en contact avec le sol, des bourrelets destinés à assurer l'accrochage du pneumatique sur la jante d'une roue, et des flancs destinés à relier le sommet aux bourrelets. Afin de relier le sommet aux bourrelets, un pneumatique comprend généralement une armature de carcasse.

Pour fabriquer une ébauche de pneumatique, on assemble successivement des éléments prenant la forme de tringles, de bandes ou de nappes de manière à former une armature de carcasse de forme cylindrique. On transforme ensuite l'armature de carcasse de forme cylindrique en armature de carcasse de forme toroïdale, pendant une étape appelée conformation. Lors de cette transformation, on étire le sommet de l'armature de carcasse de manière à en augmenter le diamètre, et on rapproche axialement ses bourrelets. Enfin, on assemble successivement, sur le sommet de l'armature de carcasse, des éléments prenant la forme de bandes ou de nappes de manière à venir former en sus une armature de sommet et une bande de roulement.

Les étapes d'assemblage et de conformation sont généralement réalisées sur un tambour de fabrication d'ébauches de pneumatique de forme cylindrique, mobile en rotation autour d'un axe de symétrie de révolution. Les éléments prenant la forme de fils, de bandes ou de nappes sont posés circonférentiellement sur le tambour ou sur l'ébauche de pneumatique en cours de fabrication. Les étapes de pose sont réalisées manuellement ou automatiquement.

Lorsque les étapes de pose sont réalisées manuellement, un opérateur situé face au tambour saisit l'extrémité d'un élément, par exemple, une nappe enroulée sur une bobine, la tire jusqu'au tambour, la positionne et la solidarise sur le tambour ou l'ébauche de pneumatique en cours de fabrication. Le tambour est ensuite mis en rotation de manière à réaliser une révolution complète. Durant la rotation du tambour, l'opérateur guide la nappe de manière à ce que l'enroulement de la nappe forme sensiblement un cylindre droit. L'opérateur découpe ensuite la nappe, et ajuste la jonction entre les deux extrémités de la nappe. Toutefois, une réalisation manuelle a des inconvénients bien connus. Notamment, l'opérateur est limité en rapidité et en précision. L'approche ou le dépassement de ces limites entrainent, par ailleurs, une augmentation de la pénibilité du travail de l'opérateur et de sa charge cognitive, ce qui peut conduire à la diminution de la qualité des ébauches de pneumatiques fabriquées, voire de la sécurité de l'opérateur.

En outre, l'automatisation des étapes de pose telles que réalisées manuellement présente des difficultés techniques importantes telles la conception d'une machine de fabrication apte à mettre en œuvre lesdites étapes de pose et, surtout, la programmation de ladite machine afin qu'elle soit en mesure d'exécuter lesdites étapes de pose.

Lorsque la fabrication d'une ébauche d'un pneumatique est réalisée automatiquement, il existe plusieurs stratégies de conception résultant en des procédés et des machines variés.

Par exemple, on connait une machine de fabrication d'ébauches de pneumatique dans laquelle un tambour est mobile au moyen d'un chariot ou d'un bras robotisé entre plusieurs postes de pose, chaque poste de pose étant adapté à poser un élément particulier tel une tringle ou une bandelette. La cadence de chaque poste n'étant pas identique, les postes de pose les plus rapides ne sont pas pleinement employés, ce qui pénalise leur efficacité. De plus, la conception, la fabrication et l'exploitation d'une telle machine d'assemblage sont très complexes et couteuses. En effet, la fiabilité de la machine ou, autrement dit, sa probabilité de fabriquer une ébauche de pneumatique sans défaillances, est réduite car elle résulte du produit de la fiabilité de chaque poste de pose pris individuellement. Par conséquent, le temps net d'exploitation d'une telle machine est moins avantageux que le temps net d'exploitation d'une machine disposant de moins de postes de pose.

On connait également une machine de fabrication d'ébauches de pneumatique ne comportant que deux postes de pose, chaque poste de poste étant adapté à poser un ensemble d'éléments préassemblés. Ainsi, deux révolutions complètes du tambour sont suffisantes afin de poser un premier ensemble visant à constituer une armature de carcasse, et un deuxième ensemble visant à constituer une armature de sommet et une bande de roulement. Néanmoins, une telle machine de fabrication requiert que l'architecture et la composition de l'ébauche de pneumatique soient elles-mêmes adaptées, ce qui contraint considérablement le processus de conception et d'industrialisation du pneumatique. Le document de brevet FR-3 088 575 A3 propose également un procédé d'alimentation en produits élastomériques de machines de fabrication d'ébauches de pneumatiques au moyen d'une installation d'alimentation.

Un objectif de l'invention est de remédier aux inconvénients de l'état de la technique et d'apporter une solution agile et productive.

Cet objectif est atteint par l'invention qui propose, selon un premier objet, un procédé de pose automatique et successive d'éléments élastomériques à l'aide d'une installation de fabrication d'ébauches de pneumatique comprenant un tambour de fabrication d'ébauches de pneumatique, au moins un bras robotisé collaboratif muni d'au moins un effecteur,
une étape de pose d'un élément élastomérique comprenant une séquence prédéterminée de pas, ladite séquence comportant les pas de saisie et de tirage vers ledit tambour de l'élément élastomérique à l'aide dudit bras,
la pose automatique et successive d'éléments élastomériques incluant des instructions exécutables par le processeur d'une unité de contrôle pour mettre en œuvre :
   - une étape automatique de réalisation d'un pas selon ladite séquence,
   - une étape d'interruption de ladite séquence,
   - une étape manuelle de réalisation du pas interrompu ou du pas suivant selon ladite séquence.

Ainsi, un poste de pose est adapté pour poser automatiquement un quelconque élément telle une tringle, une bande ou une nappe, ou un quelconque ensemble d'éléments préassemblés. Les différents éléments sont posés automatiquement par les mêmes moyens de pose, à savoir le ou les bras robotisés. Par conséquent, l'installation d'assemblage est agile contrairement aux machines d'assemblage automatiques multipostes de l'état de la technique pour lesquelles chaque poste est dédié à la pose d'un élément ou d'un ensemble préassemblé particulier.

De plus, le procédé de fabrication selon l'invention permet la fabrication d'ébauches de pneumatique de manière collaborative, ce qui offre l'avantage d'éviter l'intervention systématique d'un opérateur pour les tâches non-ergonomiques et à faible valeur ajoutée. Par exemple, l'opérateur est amené à intervenir seulement pour la pose de certains produits élastomériques pour laquelle le bras robotisé n'est pas encore apte ou programmé, ou encore, pour contrôler la qualité d'une ébauche de pneumatique en cours de fabrication.

Par ailleurs, le procédé de pose du type « saisie et tirage d'un élément élastomérique vers ledit tambour » est particulièrement adapté à la pose manuelle d'un élément élastomérique et, par conséquent, au travail collaboratif entre le bras robotisé et l'opérateur, ce qui permet la réduction de la durée des interventions de l'opérateur, et l'augmentation du temps net d'exploitation de l'installation de fabrication. Par « temps net », on entend le temps pendant lequel la machine fabrique des ébauches de pneumatiques sans prendre en compte le temps lié aux écarts de cadence et aux défaillances.

Enfin, le bras robotisé est plus précis qu'un opérateur, tout en étant plus rapide, ce qui permet l'amélioration de la qualité des ébauches de pneumatiques fabriquées, et l'augmentation du temps utile d'exploitation de l'installation de fabrication. Par « temps utile », on entend le « temps net » sans prendre en compte le temps lié à la fabrication des ébauches de pneumatiques non satisfaisantes en termes de qualité.

De préférence, l'élément élastomérique prend la forme d'une bande continue, et ladite séquence comporte, successivement au pas de tirage, le pas de guidage de l'élément élastomérique lors de son enroulage autour du tambour, et les pas de découpage et d'aboutage dudit élément.

De la même façon, un procédé de ce type est particulièrement adapté à la pose manuelle d'un élément élastomérique et, par conséquent, au travail collaboratif entre le bras robotisé et l'opérateur, ce qui permet la réduction de la durée des interventions de l'opérateur, et l'augmentation du temps net d'exploitation de l'installation de fabrication.

Avantageusement, l'étape d'interruption comprend une sous-étape d'identification d'une indication qu'une étape de réalisation automatique d'un pas n'a pas été réalisée avec succès, l'installation de fabrication comprenant, pour mettre en œuvre ladite sous-étape, des premiers moyens de mesures aptes à évaluer l'état de l'ébauche de pneumatique en cours de fabrication, des seconds moyens de mesure aptes à évaluer l'état de l'installation de fabrication, et une base de données comprenant les données issues des premiers et seconds moyens de mesure associés aux pas automatiques précédemment réalisés, et associés aux succès ou aux défaillances desdits pas.

Ainsi, l'installation de fabrication est autonome pour évaluer la qualité des ébauches de pneumatiques fabriquées. Par ailleurs, la base de données confère à l'installation la possibilité de mettre en œuvre un procédé d'apprentissage automatique, supervisé ou non et, de préférence, auto-supervisé. Un tel procédé d'apprentissage est connu et décrit dans le brevet US10445653. Ainsi, l'installation de fabrication évalue avec précision la qualité des ébauches de pneumatiques en cours de fabrication, ce qui permet d'améliorer la pertinence des interventions de l'opérateur et, également, l'augmentation du temps utile d'exploitation de l'installation de fabrication.

De préférence, l'étape d'interruption comprend une sous-étape de détection d'un opérateur au poste de pose de l'installation de fabrication, à l'aide de moyens de détection d'un opérateur. Ainsi, l'opérateur peut intervenir au poste de pose afin de réaliser manuellement un ou plusieurs pas d'une étape de pose en collaboration avec le bras robotisé et en toute sécurité.

De préférence, les premiers moyens de mesure comprennent des moyens de vision tridimensionnelle, et les seconds moyens de mesure comprennent des capteurs de force agencés sur le bras robotisé collaboratif.

Avantageusement, l'étape d'interruption comprend, successivement à la sous-étape d'identification d'une indication qu'une étape de réalisation automatique d'un pas n'a pas été réalisée avec succès, une sous-étape de sélection d'une action corrective à réaliser, parmi une liste d'actions correctives connues et selon des critères prédéterminés.

Ainsi, l'installation de fabrication est autonome pour entreprendre des actions correctives, ce qui permet, d'une part, de limiter le nombre d'interventions de l'opérateur et la durée des actions correctives en général et, d'autre part, l'augmentation du temps net d'exploitation de l'installation de fabrication.

De préférence, l'étape manuelle de réalisation du pas interrompu ou du pas suivant selon ladite séquence, comprend une sous-étape de capitalisation dans laquelle la base de données est mise à jour avec les données issues des premiers moyens de mesure durant la réalisation manuelle dudit pas.

Ainsi, l'unité de contrôle apprend de l'échec d'une étape de pose automatique et améliore son aptitude à identifier une indication qu'une étape de pose automatique en cours de réalisation n'a pas été réalisée avec succès, ce qui permet de limiter les interventions de l'opérateur, et l'augmentation du temps net d'exploitation de l'installation de fabrication.

Avantageusement, l'étape manuelle de réalisation du pas interrompu ou du pas suivant selon ladite séquence, comprend une sous-étape de capitalisation dans laquelle la liste d'actions correctives connues est mise à jour sur la base des données issues des seconds moyens de mesure durant la réalisation manuelle dudit pas.

Ainsi, l'installation de fabrication est capable de sélectionner des actions correctives parmi une liste d'actions progressivement enrichie, ce qui permet de limiter les interventions de l'opérateur, et l'augmentation du temps net d'exploitation de l'installation de fabrication.

De préférence, un pas ou une action corrective est planifié selon un modèle comprenant des séquences d'images desdits pas ou desdites actions correctives réalisés précédemment, selon une configuration initiale de ladite séquence d'images, et selon une configuration finale de ladite séquence d'images.

Ainsi, l'installation de fabrication est autonome pour planifier les étapes de pose automatique ou les actions correctives de manière adaptée aux circonstances. Par ailleurs, le modèle et les moyens de visions confèrent à l'installation le moyen de mettre en œuvre un procédé d'imitation. Un tel procédé d'imitation est connu et décrit, en particulier dans la publication arXiv 1703.02018v1 du 6 Mars 2017 intitulée « Combining Self-Supervised Learning and Imitation for Vision-Based Rope Manipulation ».

Avantageusement, l'étape automatique de réalisation d'un pas selon ladite séquence, comprend une sous-étape de capitalisation dans laquelle la base de données est mise à jour avec les données issues des premiers moyens de mesure durant la réalisation automatique dudit pas.

De préférence, l'étape automatique de réalisation d'un pas selon ladite séquence, comprend une sous-étape de capitalisation dans laquelle la liste d'actions correctives connues est mise à jour sur la base des données issues des seconds moyens de mesure durant la réalisation automatique dudit pas.

L'invention a également pour objet une installation de fabrication d'ébauches de pneumatique comprenant un tambour de fabrication d'ébauches de pneumatique, au moins un bras robotisé collaboratif muni d'au moins un effecteur, une unité de contrôle comprenant un processeur et une mémoire accessible par ledit processeur, la mémoire comprenant des instructions qui, une fois exécutées, amènent le processeur à mettre en œuvre le procédé de pose automatique et successive d'éléments élastomériques selon le premier objet de l'invention.

L'invention sera mieux comprise grâce à la suite de la description, qui s'appuie sur les figures suivantes :
- la figure 1 est une vue d'ensemble d'une installation de fabrication mettant en œuvre un procédé selon l'invention ;
- la figure 2 est un organigramme illustrant certaines étapes du procédé selon l'invention.

Sur les différentes figures, les éléments identiques ou similaires portent la même référence. Leur description n'est donc pas systématiquement reprise.

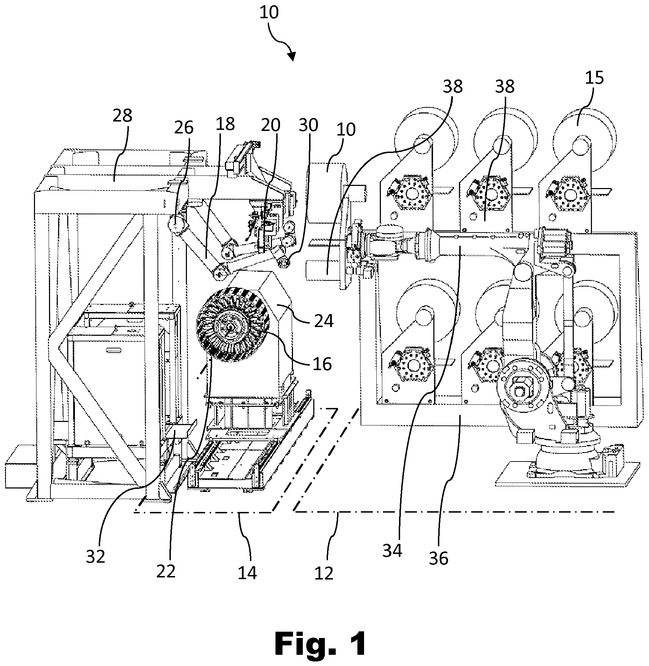

La figure 1 illustre une installation de fabrication 10 d'ébauches de pneumatique. L'installation de fabrication comprend un poste d'alimentation 12 en éléments élastomériques et au moins un poste de pose 14 desdits éléments. Par « élément élastomérique », on entend un produit élastomérique éventuellement renforcé, calandré ou extrudé selon un profil donné de manière à former une bande ou une nappe continue et, par extension, un ensemble d'éléments élastomériques préassemblés. Un élément élastomérique est généralement enroulé sur une bobine 15.

Le poste de pose 14 comprend un tambour de fabrication 16 d'ébauches de pneumatique (partiellement représenté) et au moins un bras robotisé collaboratif 18 muni d'au moins un effecteur 20. Par « poste de pose », on entend également la zone dans laquelle les éléments élastomériques sont posés. L'installation de fabrication comprend une unité de contrôle apte à piloter le poste d'alimentation et le poste de pose.

Le tambour 16 prend la forme d'un cylindre, généralement droit, à symétrie de révolution d'axe central 22. Le tambour est mobile en rotation autour de l'axe central par rapport à un support 24, le support étant lui-même fixe ou mobile dans le plan horizontal au moyen, par exemple, d'un chariot, ou mobile selon plusieurs directions au moyen, par exemple, d'un robot industriel multiaxes. La surface radialement externe du tambour constitue une surface de pose avec laquelle le ou les premiers éléments posés sont en contact. Le ou les seconds éléments posés sont en contact avec la surface radialement externe des premiers éléments posés.

Le bras robotisé 18 est du type « anthropomorphe » à six axes, et comporte une série de cinq segments de longueur variable, articulés entre eux par quatre articulations. A titre d'exemple, une articulation est réalisée par un axe et deux pivots, et actionnée par un moteur électrique. Une première extrémité du bras est montée mobile à pivotement avec une base 26 par l'intermédiaire d'une première articulation, la base étant agencée sur une structure fixe 28, et une seconde extrémité appelée embase 30, est montée mobile à pivotement avec le ou les effecteurs par l'intermédiaire d'une dernière articulation. En fonction du ou des effecteurs 20 utilisés et de l'agencement du poste de pose 14, le bras 18 peut prendre des formes variées avec plus ou moins d'axes de mobilité.

Le bras robotisé 18 est apte à la pose automatique et successive d'éléments élastomériques sur le tambour 16. Les effecteurs permettant la mise en œuvre de la pose automatique sont choisis parmi le groupe suivant : pince, ventouse, roulette, ciseau, soufflette, spray, applicateur.

Par « collaboratif », on entend qu'un bras robotisé 18 est conçu pour effectuer des tâches en collaboration avec un opérateur. Autrement dit, le bras comporte des détecteurs de proximité aptes à détecter la présence d'un opérateur dans l'environnement du poste de pose, et/ou des capteurs de force aptes à détecter, lors des déplacements du bras, un retour de force imprévu, par exemple lors d'une collision avec l'opérateur. Ainsi, le bras peut s'immobiliser ou adapter ses déplacements afin de permettre à l'opérateur de se déplacer et d'intervenir au poste de pose en sécurité.

A titre d'exemple, l'installation de fabrication 10 comprend deux bras robotisés 18. La structure fixe 28 sur laquelle les bras 18 sont fixés prend la forme d'un châssis métallique qui délimite, au moins en partie, un espace de travail 32 pour un opérateur. L'espace de travail 32 est dimensionné de manière à permettre à l'opérateur d'observer la pose automatique ou de poser manuellement un élément élastomérique sans être gêné par les bras robotisés. A cette fin, les bases 26 des bras sont suffisamment distantes axialement, de préférence, de 0,5 m à 1,5 m, pour permettre à l'opérateur de poser manuellement un élément ou un ensemble élastomérique entre les bras sans être gêné, et/ou afin de permettre aux bras de saisir l'élément élastomérique sur toute ou partie de la largeur de la bande en minimisant l'extension des bras, l'extension excessive d'un bras selon une direction donnée créant une situation dite « en porte à faux » qui occasionne des retours de force semblables à ceux d'une collision avec un opérateur et, par conséquent, l'immobilisation du bras. Ensuite, les bases 26 des bras robotisés sont suffisamment élevées verticalement, de préférence, d'au moins 1,5 m par rapport à la base de l'espace de travail 32, pour permettre à l'opérateur de poser manuellement un élément élastomérique sans que les bras ne perturbent son champ de vision. Enfin, les bases des bras robotisés sont disposées en surplomb par rapport au tambour 16, de préférence à plus ou moins 0,5 m de l'axe central 22 du tambour selon une direction horizontale, afin de permettre aux bras d'accéder aisément au tambour et au poste d'alimentation 12 en minimisant l'extension des bras.

Une étape de pose d'un élément élastomérique comprend une séquence prédéterminée de pas. Selon l'invention, la pose automatique et successive d'éléments élastomériques inclut des instructions exécutables par un processeur de l'unité de contrôle, ladite unité de contrôle comprenant également une mémoire accessible par ledit processeur, la mémoire comprenant lesdites instructions qui, une fois exécutées, amènent le processeur à mettre en œuvre :
- une étape automatique de réalisation d'un pas selon ladite séquence,
- une étape d'interruption de ladite séquence,
- une étape manuelle de réalisation du pas interrompu ou du pas suivant selon ladite séquence.

L'installation de fabrication comprend des premiers moyens de mesure aptes à évaluer l'état de l'ébauche de pneumatique en cours de fabrication, des seconds moyens de mesure aptes à évaluer l'état de l'installation de fabrication, et une base de données comprenant les données issues des premiers et seconds moyens de mesure associées aux étapes de pose automatiques précédemment entreprises, et associées aux succès ou aux défaillances desdites étapes. La base de données est hébergée sur un serveur appartenant à l'unité de contrôle.

A titre d'exemple, les premiers moyens de mesure comprennent des moyens de mesure de la masse et du balourd de l'ébauche autour de l'axe central 22 du tambour telle une jauge de déformation, et des moyens de mesure des dimensions de l'ébauche tel un profilomètre laser. De préférence, les premiers moyens de mesure comprennent des moyens de vision tridimensionnelle aptes à caractériser en temps réel et de manière précise le profil de l'ébauche et/ou de l'élément élastomérique en cours de pose.

A titre d'exemple, les seconds moyens de mesure comprennent également les moyens de vision tridimensionnelle aptes à scanner l'environnement du poste de pose, et les capteurs de force des bras robotisés aptes à mesurer le retour de force dans les bras lors de la pose d'un élément élastomérique. Ainsi, les seconds moyens de mesure sont aptes à évaluer la tension dans l'élément élastomérique tiré vers le tambour, ou guidé de manière à ce que l'enroulement de l'élément forme sensiblement un cylindre droit.

Aux fins de traitement des données issues des moyens de visions, et pour éviter tout ralentissement lors du pilotage des étapes de pose, l'unité de contrôle comprend des moyens de calcul dimensionnés de manière adaptée. Par ailleurs, l'installation de fabrication comprend des moyens de communication avec l'opérateur, telle une colonne lumineuse ou encore, un appareil numérique portable connecté à l'unité contrôle par wifi.

L'unité de contrôle est apte, notamment, à piloter la pose automatique des éléments élastomériques et à demander une étape de pose manuelle. Le pilotage de la pose est adapté, à l'aide des premiers et seconds moyens de mesure, aux caractéristiques de l'élément élastomérique à poser telles les dimensions, la rigidité et la ductilité.

Par ailleurs, l'unité de contrôle est apte à mettre à jour la base de données avec les données issues des premiers et des seconds moyens de mesure lors de la pose manuelle ou automatique, à mettre à jour la liste d'actions correctives connues sur la base des données issues des seconds moyens de mesure durant la pose manuelle ou automatique.

Le poste d'alimentation 12 en éléments élastomériques comprend un robot industriel multiaxes 34 apte à manipuler un contenant supportant un élément élastomérique. A cette fin, le robot est muni de moyens de vision. Par « poste d'alimentation », on entend également la zone dans laquelle le robot industriel est situé. Le poste d'alimentation 12 est adjacent au poste de pose 14, et comprend un espace de stockage 36 dans lequel les contenants sont disposés. Par exemples, les contenants prennent la forme de bobines 15, de dévidoirs 38 comportant une bobine 15, ou de tables à rouleaux supportant un élément élastomérique inadapté à être stocké sur une bobine. Le nombre de contenants présents sur l'espace de stockage 36 est adapté au nombre d'éléments à poser lors de la fabrication d'une ébauche de pneumatique de manière à limiter la surface de l'espace de stockage.

### Procédé de fabrication d'ébauches de pneumatique

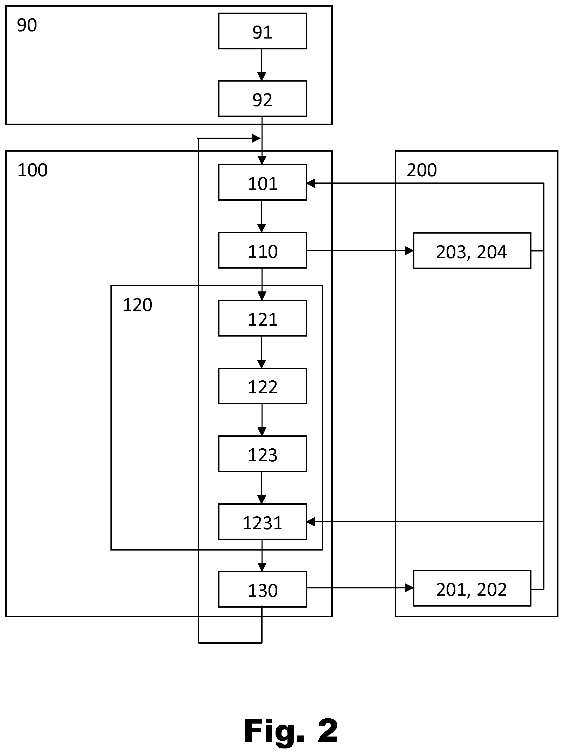

L'ordinogramme à la figure 2 illustre un procédé de fabrication d'ébauche de pneumatique qui comprend, notamment, la pose 100 successive d'éléments élastomériques à l'aide d'une installation de fabrication 10.

A cette fin, le procédé comprend, préalablement à la pose, une étape d'alimentation 90 du poste de pose 14 en élément élastomérique, à l'aide du poste d'alimentation 12, l'élément à poser prenant la forme d'une bande ou d'une nappe continue. L'étape d'alimentation comprend une sous-étape de saisie 91 d'un contenant, telle une bobine 15, un dévidoir 38 comportant une bobine 15, ou une table à rouleaux, par un robot industriel multiaxes 34 ou un chariot autonome, chaque contenant comportant un élément élastomérique à poser, et une sous-étape de positionnement 92 du contenant de manière à ce que l'élément élastomérique soit en conditions pour être posé.

Le procédé comprend ensuite une étape de pose 100 pilotée de manière automatique par l'unité de contrôle. Au moins un bras robotisé collaboratif 18, muni d'au moins un effecteur 20, pose automatiquement l'élément élastomérique sur un tambour de fabrication 16 d'ébauches de pneumatique. Une étape de pose comprend, appliquées à l'élément à poser, une séquence comportant les pas de détection, de saisie, de tirage vers le tambour 16, de positionnement et de solidarisation sur le tambour, de guidage lors de son enroulage autour du tambour, de découpage et d'aboutage. Le bras 18 met en œuvre des étapes de pose automatique de manière successive.

La pose automatique et successive d'éléments élastomériques inclut des instructions exécutables par le processeur de l'unité de contrôle pour mettre en œuvre le procédé. Selon l'invention, le procédé comprend une étape automatique de réalisation 110 d'un pas selon ladite séquence, une étape automatique d'interruption 120 dudit pas ou de ladite séquence, et une étape manuelle de réalisation 130 du pas interrompu ou du pas suivant de ladite séquence. A l'issue de l'étape manuelle, la réalisation automatique de la séquence de pose d'un élément reprend.

L'étape d'interruption 120 comprend une sous-étape d'identification 121 d'une indication qu'une étape de pose automatique en cours de réalisation n'a pas été réalisée avec succès, une sous-étape de détermination 122 d'une action corrective à entreprendre, et une sous-étape de pilotage 123 de l'action corrective déterminée comprenant la communication à l'opérateur d'une instruction d'intervention.

L'unité de contrôle identifie une indication qu'une étape de pose automatique en cours de réalisation n'a pas été réalisée avec succès, à l'aide de premiers moyens de mesures aptes à évaluer l'état de l'ébauche de pneumatique en cours de fabrication, de seconds moyens de mesure aptes à évaluer l'état de l'installation de fabrication, et d'une base de données comprenant des tolérances de pose prédéfinies ou, de préférence, les données issues des premiers et seconds moyens de mesure associés à des étapes de pose automatiques précédemment entreprises, et associés aux succès ou aux défaillances desdites étapes. Autrement dit, l'unité de contrôle compare les données collectées lors de l'étape de pose en cours de réalisation avec les données collectées lors d'étapes de pose précédentes. Préalablement à la comparaison des données, un opérateur évalue l'état de l'ébauche de pneumatique lors d'étapes de pose automatiques précédemment entreprises, et renseigne la base de données afin d'associer à un succès ou à une défaillance lesdites étapes.

Puis, l'unité de contrôle sélectionne dans une liste d'actions correctives connues, et selon des critères prédéterminés, une action corrective à entreprendre.

L'unité de contrôle pilote ensuite l'action corrective sélectionnée. Selon une variante, l'unité de contrôle peut piloter une action corrective automatique afin que l'étape de pose en cours de réalisation soit réalisée avec succès. Ainsi, l'étape de pilotage de l'action corrective comprend également les sous-étapes de planification, de réalisation, et de vérification de l'action corrective. De préférence, lorsque l'action corrective sélectionnée est manuelle ou lorsque l'action corrective automatique n'est pas été réalisée avec succès, l'unité de contrôle communique une instruction d'intervention à l'opérateur.

Les étapes de pose automatique ou de mise en œuvre d'une action corrective automatique sont planifiées 101, 1231 selon un modèle comprenant des séquences d'images desdites étapes de pose ou desdites actions correctives entreprises précédemment, selon une configuration initiale de ladite séquence d'images, et selon une configuration finale de ladite séquence d'images.

Enfin, le procédé comprend plusieurs étapes de capitalisation dans lesquelles :
- la base de données est mise à jour 201 avec les données issues des premiers moyens de mesure lors de la pose manuelle ;
- la liste d'actions correctives connues est mise à jour 202 sur la base des données issues des seconds moyens de mesure lors de la pose manuelle ;
- la base de données est mise à jour 203 avec les données issues des premiers moyens de mesure durant la pose automatique ;
- la liste d'actions correctives connues est mise à jour 204 sur la base des données issues des seconds moyens de mesure durant la pose automatique.

## Revendications

1. Procédé de pose automatique et successive d'éléments élastomériques à l'aide d'une installation de fabrication d'ébauches de pneumatique (10) comprenant un tambour de fabrication (16) d'ébauches de pneumatique,
au moins un bras robotisé collaboratif (18) muni d'au moins un effecteur (20),
une étape de pose d'un élément élastomérique comprenant une séquence prédéterminée de pas, ladite séquence comportant les pas de saisie et de tirage vers ledit tambour de l'élément élastomérique à l'aide dudit bras, **caractérisé en ce que**
la pose automatique et successive d'éléments élastomériques inclut des instructions exécutables par le processeur d'une unité de contrôle pour mettre en œuvre :
- une étape automatique de réalisation (110) d'un pas selon ladite séquence,
- une étape d'interruption (120) de ladite séquence,
- une étape manuelle de réalisation (130) du pas interrompu ou du pas suivant selon ladite séquence.

2. Procédé selon la revendication précédente, dans lequel l'élément élastomérique prend la forme d'une bande continue, et dans lequel ladite séquence comporte, successivement au pas de tirage, le pas de guidage de l'élément élastomérique lors de son enroulage autour du tambour (16), et les pas de découpage et d'aboutage dudit élément.

3. Procédé selon l'une des revendications précédentes, dans lequel l'étape d'interruption (120) comprend une sous-étape d'identification (121) d'une indication qu'une étape de réalisation automatique d'un pas n'a pas été réalisée avec succès,
l'installation de fabrication (10) comprenant, pour mettre en œuvre ladite sous-étape, des premiers moyens de mesures aptes à évaluer l'état de l'ébauche de pneumatique en cours de fabrication, des seconds moyens de mesure aptes à évaluer l'état de l'installation de fabrication, et une base de données comprenant les données issues des premiers et seconds moyens de mesure associés aux pas automatiques précédemment réalisés, et associés aux succès ou aux défaillances desdits pas.

4. Procédé selon la revendication 3, dans lequel l'étape d'interruption (120) comprend une sous-étape de détection d'un opérateur au poste de pose de l'installation de fabrication, à l'aide de moyens de détection d'un opérateur.

5. Procédé selon la revendication 3 ou 4, dans lequel les premiers moyens de mesure comprennent des moyens de visions tridimensionnelles, et dans lequel les seconds moyens de mesure comprennent des capteurs de force agencés sur le bras robotisé collaboratif (18).

6. Procédé selon l'une des revendications 3 à 5, dans lequel l'étape d'interruption (120) comprend, successivement à la sous-étape d'identification (121) d'une indication qu'une étape de réalisation automatique d'un pas n'a pas été réalisée avec succès, une sous-étape de sélection (122) d'une action corrective à réaliser, parmi une liste d'actions correctives connues et selon des critères prédéterminés.

7. Procédé selon l'une des revendications 3 à 6, dans lequel l'étape manuelle de réalisation (130) du pas interrompu ou du pas suivant selon ladite séquence, comprend une sous-étape de capitalisation (201) dans laquelle la base de données est mise à jour avec les données issues des premiers moyens de mesure durant la réalisation manuelle dudit pas.

8. Procédé selon l'une des revendications 6 ou 7, dans lequel l'étape manuelle de réalisation (130) du pas interrompu ou du pas suivant selon ladite séquence, comprend une sous-étape de capitalisation (202) dans laquelle la liste d'actions correctives connues est mise à jour sur la base des données issues des seconds moyens de mesure durant la réalisation manuelle dudit pas.

9. Procédé selon l'une des revendications 3 à 8, dans lequel un pas ou une action corrective est planifié (101, 1231) selon un modèle comprenant des séquences d'images desdits pas ou desdites actions correctives réalisés précédemment, selon une configuration initiale de ladite séquence d'images, et selon une configuration finale de ladite séquence d'images.

10. Procédé selon l'une des revendications 3 à 9, dans lequel l'étape automatique de réalisation d'un pas selon ladite séquence, comprend une sous-étape de capitalisation (203) dans laquelle la base de données est mise à jour avec les données issues des premiers moyens de mesure durant la réalisation automatique dudit pas.

11. Procédé selon l'une des revendications 6 à 10, dans lequel l'étape automatique de réalisation d'un pas selon ladite séquence, comprend une sous-étape de capitalisation (204) dans laquelle la liste d'actions correctives connues est mise à jour sur la base des données issues des seconds moyens de mesure durant la réalisation automatique dudit pas.

12. Installation de fabrication (10) d'ébauches de pneumatique comprenant un tambour de fabrication (16) d'ébauches de pneumatique,
au moins un bras robotisé collaboratif (18) muni d'au moins un effecteur (20),
une unité de contrôle comprenant un processeur et une mémoire accessible par ledit processeur, la mémoire comprenant des instructions qui, une fois exécutées, amènent le processeur à mettre en œuvre le procédé de pose automatique et successive d'éléments élastomériques selon l'une des revendications 1 à 11.

## Patentansprüche

1. Verfahren zum automatischen und sukzessiven Auflegen elastomerer Elemente mithilfe einer Anlage zur Fertigung von Reifenrohlingen (10), umfassend eine Aufbautrommel (16) für Reifenrohlinge,
mindestens einen kollaborativen robotisierten Arm (18), der mit mindestens einem Effektor (20) ausgestattet ist, wobei ein Schritt des Auflegens eines elastomeres Elements eine vorbestimmte Folge von Teilschritten umfasst, wobei die Folge die Teilschritte des Ergreifens des elastomeren Elements und des Ziehens desselben zur Trommel mithilfe des Armes aufweist, **dadurch gekennzeichnet, dass**
das automatische und sukzessive Auflegen elastomerer Elemente Anweisungen beinhaltet, die vom Prozessor einer Steuereinheit ausführbar sind, um durchzuführen:
- einen automatischen Schritt der Ausführung (110) eines Teilschritts gemäß der Folge,
- einen Schritt der Unterbrechung (120) der Folge,
- einen manuellen Schritt der Ausführung (130) des unterbrochenen Teilschritts oder des folgenden Teilschritts gemäß der Folge.

2. Verfahren nach dem vorhergehenden Anspruch, wobei das elastomere Element die Form eines endlosen Streifens annimmt und wobei die Folge, im Anschluss an den Teilschritt des Ziehens, den Teilschritt des Führens des elastomeren Elements während seines Wickelns um die Trommel (16) und die Teilschritte des Zuschneidens und der Endverbindung des Elements aufweist.

3. Verfahren nach einem der vorhergehenden Ansprüche, wobei der Schritt der Unterbrechung (120) einen Unterschritt der Identifikation (121) eines Hinweises umfasst, dass ein Schritt der automatischen Ausführung eines Teilschritts nicht erfolgreich ausgeführt worden ist,
wobei die Fertigungsanlage (10), um diesen Unterschritt durchzuführen, erste Messmittel umfasst, die geeignet sind, den Zustand des Reifenrohlings, der gefertigt wird, zu beurteilen, zweite Messmittel, die geeignet sind, den Zustand der Fertigungsanlage zu beurteilen, und eine Datenbank, die von den ersten und zweiten Messmitteln gelieferte Daten umfasst, die den zuvor ausgeführten automatischen Teilschritten zugeordnet sind und den Erfolg oder Misserfolg dieser Teilschritte betreffen.

4. Verfahren nach Anspruch 3, wobei der Schritt der Unterbrechung (120) einen Unterschritt der Erkennung eines Bedieners an der Auflegestation der Fertigungsanlage mithilfe von Mitteln zur Erkennung eines Bedieners umfasst.

5. Verfahren nach Anspruch 3 oder 4, wobei die ersten Messmittel Mittel zur dreidimensionalen Sicht umfassen und wobei die zweiten Messmittel Kraftsensoren umfassen, die an dem kollaborativen robotisierten Arm (18) angeordnet sind.

6. Verfahren nach einem der Ansprüche 3 bis 5, wobei der Schritt der Unterbrechung (120) im Anschluss an den Unterschritt der Identifikation (121) eines Hinweises, dass ein Schritt der automatischen Ausführung eines Teilschritts nicht erfolgreich ausgeführt worden ist, einen Unterschritt der Auswahl (122) einer durchzuführenden Korrekturmaßnahme aus einer Liste bekannter Korrekturmaßnahmen gemäß vorbestimmten Kriterien umfasst.

7. Verfahren nach einem der Ansprüche 3 bis **6,** wobei der manuelle Schritt der Ausführung (130) des unterbrochenen Teilschritts oder des folgenden Teilschritts gemäß der Folge einen Unterschritt der Datenkapitalisierung (201) umfasst, in dem die Datenbank mit den Daten aktualisiert wird, die von den ersten Messmitteln während der manuellen Ausführung dieses Teilschritts geliefert werden.

8. Verfahren nach einem der Ansprüche 6 oder 7, wobei der manuelle Schritt der Ausführung (130) des unterbrochenen Teilschritts oder des folgenden Teilschritts gemäß der Folge einen Unterschritt der Datenkapitalisierung (202) umfasst, in dem die Liste bekannter Korrekturmaßnahmen auf der Basis der Daten aktualisiert wird, die von den zweiten Messmitteln während der manuellen Ausführung dieses Teilschritts geliefert werden.

9. Verfahren nach einem der Ansprüche 3 bis 8, wobei ein Teilschritt oder eine Korrekturmaßnahme gemäß einem Modell geplant wird (101, 1231), das Folgen von Bildern dieser Teilschritte oder dieser Korrekturmaßnahmen, die zuvor ausgeführt wurden, umfasst, gemäß einer Anfangskonfiguration der Folge von Bildern und gemäß einer Endkonfiguration der Folge von Bildern.

10. Verfahren nach einem der Ansprüche 3 bis 9, wobei der automatische Schritt der Ausführung eines Teilschritts gemäß der Folge einen Unterschritt der Datenkapitalisierung (203) umfasst, in dem die Datenbank mit den Daten aktualisiert wird, die von den ersten Messmitteln während der automatischen Ausführung dieses Teilschritts geliefert werden.

11. Verfahren nach einem der Ansprüche 6 bis 10, wobei der automatische Schritt der Ausführung eines Teilschritts gemäß der Folge einen Unterschritt der Datenkapitalisierung (204) umfasst, in dem die Liste bekannter Korrekturmaßnahmen auf der Basis der Daten aktualisiert wird, die von den zweiten Messmitteln während der automatischen Ausführung dieses Teilschritts geliefert werden.

12. Anlage zur Fertigung (10) von Reifenrohlingen, umfassend
eine Aufbautrommel (16) für Reifenrohlinge,
mindestens einen kollaborativen robotisierten Arm (18), der mit mindestens einem Effektor (20) ausgestattet ist, eine Steuereinheit, die einen Prozessor und einen Speicher, auf den der Prozessor zugreifen kann, umfasst, wobei der Speicher Anweisungen umfasst, die, wenn sie ausgeführt werden, den Prozessor veranlassen, das Verfahren zum automatischen und sukzessiven Auflegen elastomerer Elemente nach einem der Ansprüche 1 bis 11 durchzuführen.

## Claims

1. A method for automatically and successively laying elastomeric elements using a facility (10) for manufacturing tire blanks, comprising
a drum (16) for manufacturing tire blanks,
at least one collaborative robotized arm (18) equipped with at least one effector (20), a stage of laying an elastomeric element, comprising a predetermined sequence of steps, the sequence comprising the steps of grasping and drawing the elastomeric element towards the drum using said arm,
**characterized in that** the automatic and successive laying of elastomeric elements includes instructions which can be executed by the processor of a control unit in order to implement:
- a stage (110) of automatic performance of a step according to said sequence,
- a stage (120) of interruption of said sequence;
- a stage (130) of manual performance of the interrupted step or the next step according to said sequence.

2. The method as claimed in the preceding claim, wherein the elastomeric element takes the form of a continuous strip, and wherein said sequence comprises, following the drawing step, the step of guiding the elastomeric element during its winding around the drum (16), and the steps of cutting and joining said element.

3. The method as claimed in any of the preceding claims, wherein the interruption stage (120) comprises a sub-stage (121) of identifying an indication that a stage of automatic performance of a step has not been successfully performed,
wherein to implement said sub-stage, the manufacturing facility (10) comprises first measurement means able to evaluate the state of the tire blank during production, second measurement means able to evaluate the state of the manufacturing facility, and a database containing data taken from said first and second measurement means and associated with the automatic steps previously performed and associated with the success or failure of said steps.

4. The method as claimed in claim 3, wherein the interruption stage (120) comprises a sub-stage of detecting an operator at the laying station of the manufacturing facility using operator detection means.

5. The method as claimed in claim 3 or 4, wherein the first measurement means comprise three-dimensional vision means, and wherein the second measurement means comprise force sensors arranged on the collaborative robotized arm (18).

6. The method as claimed in any of claims 3 to 5, wherein the interruption stage (120) comprises, following the sub-stage (121) of identifying an indication that a stage of automatic performance of a step has not been successfully performed, a sub-stage (122) of selecting a corrective action to be performed from a list of known corrective actions and according to predefined criteria.

7. The method as claimed in any of claims 3 to 6, wherein the stage (130) of manual performance of the interrupted step or the next step in said sequence comprises a capitalization sub-stage (201) in which the database is updated with data taken from the first measurement means during the manual performance of said step.

8. The method as claimed in one of claims 6 or 7, wherein the stage (130) of manual performance of the interrupted step or the next step in said sequence comprises a capitalization sub-stage (202) in which the list of known corrective actions is updated on the basis of data taken from the second measurement means during the manual performance of said step.

9. The method as claimed in any of claims 3 to 8, wherein a step or a corrective action is scheduled (101, 1231) according to a model comprising sequences of images of said steps or said corrective actions previously performed, according to an initial configuration of said image sequence and according to a final configuration of said image sequence.

10. The method as claimed in any of claims 3 to 9, wherein the stage of automatic performance of a step according to said sequence comprises a capitalization sub-stage (203) in which the database is updated with data taken from the first measurement means during the automatic performance of said step.

11. The method as claimed in any of claims 6 to 10, wherein the stage of automatic performance of a step according to said sequence comprises a capitalization sub-stage (204) in which the list of known corrective actions is updated on the basis of data taken from the second measurement means during the automatic performance of said step.

12. A facility (10) for manufacturing tire blanks, comprising
a drum (16) for manufacturing tire blanks,
at least one collaborative robotized arm (18) equipped with at least one effector (20), a control unit comprising a processor and a memory accessible by said processor, the memory containing instructions which, once executed, cause the processor to implement the method of automatically and successively laying elastomeric elements as claimed in any of claims 1 to 11.
